# EUROPEAN PATENT SPECIFICATION

(11) **EP 3 346 832 B1**
(45) Date of publication and mention of the grant of the patent: **11.03.2020**
(21) Application number: 16750484.4
(22) Date of filing: 27.07.2016
(51) Int. Cl.: A01M 29/18, G08B 13/16

(54) **ANIMAL PEST DETECTION METHOD AND DEVICE**
VERFAHREN UND VORRICHTUNG FÜR DEN NACHWEIS VON TIERISCHEN SCHÄDLINGEN
PROCÉDÉ ET DISPOSITIF DE DÉTECTION D'ANIMAL NUISIBLE

(30) Priority: 27.07.2015 GB 201513169
(43) Date of publication of application: 18.07.2018
(73) Proprietor: Rentokil Initial 1927 PLC, Camberley, Surrey GU17 9AB (GB)
(72) Inventor: BRIGHAM, Andrew, Camberley Surrey GU17 9AB (GB)
(74) Representative: Abel & Imray
(86) International application number: PCT/GB2016/052306
(87) International publication number: WO 2017/017451

(56) References cited:
- EP-A1- 2 165 603
- WO-A1-00/13393
- DE-A1-102013 219 474
- DE-U1- 29 820 802
- FR-A1- 2 775 160
- GB-A- 1 592 162
- US-A- 4 965 552
- US-A1- 2011 080 272
- US-B1- 6 570 494

## Description

### Background

The present invention relates to an animal pest detection method and device.

Generally, animal pest detection is carried out with the purpose of eliminating or relocating animal pests from the site where detection occurs. In certain cases, detection is carried out as an initial step and once the presence of an animal pest, for example a mouse or a rat, has been detected, further, additional measures can be taken.

Animal pests are currently detected in several ways in that they can be merely observed, their droppings can be observed, damage to property can be noted and bait that is set down in boxes or trays can be frequently inspected to identify if an animal has been feeding from the bait. Fluorescent tracking dust can also be laid in an effort to track rodent movement. Furthermore, an operator can place traps or monitoring boxes incorporating electronic detection equipment which detect animals passing inside and alert the operator by some form of indicator, for example, a flashing light.

Currently, due to the limitations or disadvantages of the methods above, it can be very difficult to detect animal pests, particularly low level animal infestations inside buildings in which only a few animals may be present. For example, some animals such as mice are nocturnal and rarely seen during daylight hours. Furthermore, property damage, droppings and bait-removal are all detected "after the event". It is also time consuming to check bait and monitoring boxes to see if bait has been taken or the indicator has been activated respectively. In addition, some animals such as rodents do not enter bait or monitoring boxes willingly resulting in the assumption that there is no infestation because no bait is taken or the box indicator has not been activated.

The time delay to detection can be a matter of weeks and, in some cases, there is no detection at all. This is particularly disadvantageous since even a relatively temporary incidence of animals such as mice can lead to severe problems such as the spreading of diseases and continued damage or destruction of property.

The problem with the above methods is that they rely on the animal approaching and interacting with the method in question. If the space in which detection is taking place is too large or the infestation is too sparse, then these methods alone will not be sufficient. Despite these limitations and disadvantages being known for many years, the applicant is unaware of any substantial improvements in methods of detection which ameliorate them.

There is accordingly a need to provide improved means of animal pest detection which overcomes some or all of these and other disadvantages.

DE 102013219474 A1 (Fraunhofer-Gesellschaft zur Förderung der angewandten Forschung e.V.) published 26 March 2015 discloses a device for obtaining information about one or more living beings. The device comprises an actuator, a sensor and an evaluator. The actuator is configured to output an excitation signal for exciting the living being(s). The sensor is configured to detect a signal generated by the living being(s) in reaction to the excitation signal, to obtain a detected signal. The evaluator is configured to evaluate the detected signal so as to obtain the information about the living being(s).

GB 1592162 A (Minister for Agriculture, Fisheries and Food) published 1 July 1981 discloses a pest control means and a method of pest control for animals, especially rodents. The pest control means has sound transmitting means to transmit sounds characteristic of the young of a species of animal to be attracted and trapped and audible thereby.

FR 2775160 A1 (Sofi Industries) published 27 August 1999 discloses a system that uses ultrasound combined with sound effects to simulate presence of predator. The procedure includes the transmission of an ultrasonic acoustic signal with a frequency between 20 and 50 kHz. This signal reproduces the distress call emitted by rats and other rodents in response to the scent of their predator, such as a fox.

DE 29820802 U1 (WALDMANN GUENTER DIPL ING) published 18 February 1999 discloses a device for the automated protection of areas, zone, and/or objects from pests such as wild animals or insects. The device registers the approach or presence of pests acoustically. It then emits a sound of a predator to deter the pest. The device uses the hearing of mammals and the sensitivity of different insect species in the ultrasonic range, beyond the upper threshold of human hearing.

### Summary of the invention

In accordance with a first aspect of the present invention, there is provided a method of pest control, the method comprising: storing an ultrasonic signal pattern characteristic of a sound made by a species of animal; outputting a sound corresponding to the stored ultrasonic signal pattern;
monitoring for sounds in a desired region so as to obtain an input sound signal within a predetermined frequency range;
characterised in that the method further comprises: analysing the obtained input sound signal to distinguish at least one ultrasonic signal pattern characteristic of a sound made by the species of animal within the frequency range, determining if an animal of the species of animal is present in the desired region based on the distinguishing of the at least one ultrasonic signal pattern characteristic of a sound made by the animal, wherein the sound output is a vocalisation made by the species of animal.

In this way, animal pests can be detected at a range of, for example, greater than 1 metre, and giving fewer false alarms since something specific to the pest is being detected rather than relying on a specific interaction, such as entry into a box.

Preferably, the method further comprises determining if an animal is present in the desired region based on the distinguishing of the at least one ultrasonic signal pattern characteristic of a sound made by the animal. The method may further comprise analysing the input sound signal to distinguish between ultrasonic signal patterns characteristic of different sounds made by the animal.

Digital signal processing may be used to analyse the input sound signal.

The method may further comprise storing the input sound signal in a memory prior to the analysis step.

The method may further comprise transmitting the input data to a remote location prior to the analysis step. Alternatively and/or additionally, the method may further comprise transmitting the input sound signal to a remote location prior to the analysis step.

Advantageously, the method further comprises playing back the input sound signal to an operator. In this way, the operator can confirm the detection of the animal.

The sound output may be such that the animal is induced to approach the desired region. The sound output may be such that the animal is induced to depart from the desired region. Alternatively and/or additionally, the sound output may be such that the animal is induced to depart from the desired region. The sound output is a vocalisation made by the animal.

The animal may be a rodent. However, it will be appreciated that the invention is applicable to various other species of animal. The ultrasonic signal pattern may be characteristic of any one or more of a rodent whistle, a rodent roar or a call of a rodent pup separated from its mother.

In accordance with a second aspect of the present invention, there is provided a device configured to store an ultrasonic signal pattern characteristic of a sound made by an animal in a memory, the device comprising: a first transducer configured to output a sound corresponding to the stored signal ultrasonic pattern; characterised in that the device further comprises: a second transducer configured to monitor for sounds in the desired region so as to obtain an input sound signal within a predetermined frequency range; and a processing unit configured to analyse the input sound signal to distinguish at least one ultrasonic signal pattern characteristic of a sound made by an animal within the frequency range.

Preferably, the device is configured to generate an output signal if a sound made by the animal is detected. In this way, the presence of an animal in the desired region is indicated. The processing unit may be further configured to analyse the input sound signal to distinguish between ultrasonic signal patterns characteristic of different sounds made by the animal.

The processing unit may use digital signal processing to analyse the input sound signal.

The device may be configured to store the input sound signal in a memory.

The device may further comprise an external interface, the external interface configured to enable data to be retrieved from the device or to provide connection to an external network. The external network may be the Internet, for example.

The sound output may be such that the animal is induced to approach the desired region. The sound output may be such that the animal is induced to depart from the desired region. Alternatively and/or additionally, the sound output may be such that the animal is induced to depart from the desired region. The sound output is a vocalisation made by the animal.

The animal may be a rodent. The ultrasonic signal pattern may be characteristic of any one or more of a rodent whistle, a rodent roar or a call of a rodent pup separated from its mother.

The first transducer may be separate to the remainder of the device and connected to the device by a suitable connector such that the first transducer can be positioned away from the device.

The device may further comprise a plurality of first transducers.

### Brief description of the drawings

One or more embodiments in accordance with the present invention are now described, by way of example only, with reference to the accompanying drawings in which:
Figures 1a to 1d each show a graph of strong frequencies versus time for an input sound signal and in which each exhibits a different type of signal pattern;
Figure 2 is a functional schematic block diagram of an exemplary device;
Figure 3 is a functional schematic block diagram of a system according to an embodiment of the invention;
Figure 4 shows a system for detecting rodent pests; and
Figure 5 illustrates a measure of relative amplitude used in the signal processing.

### Detailed description

Many animals, including humans, use vocal signals to communicate or to socially interact. Different species use specific vocalisations to convey different types of information. Some animals produce ultrasonic vocalisations (USVs), i.e. the vocalisation comprises an oscillating sound pressure wave with a frequency greater than the upper limit of the human hearing range. This limit varies from person to person but it is generally considered to be approximately 20 kHz (20,000 Hz) in healthy, young adults, although for older people it can be lower, for example 18 kHz due to age related hearing loss.

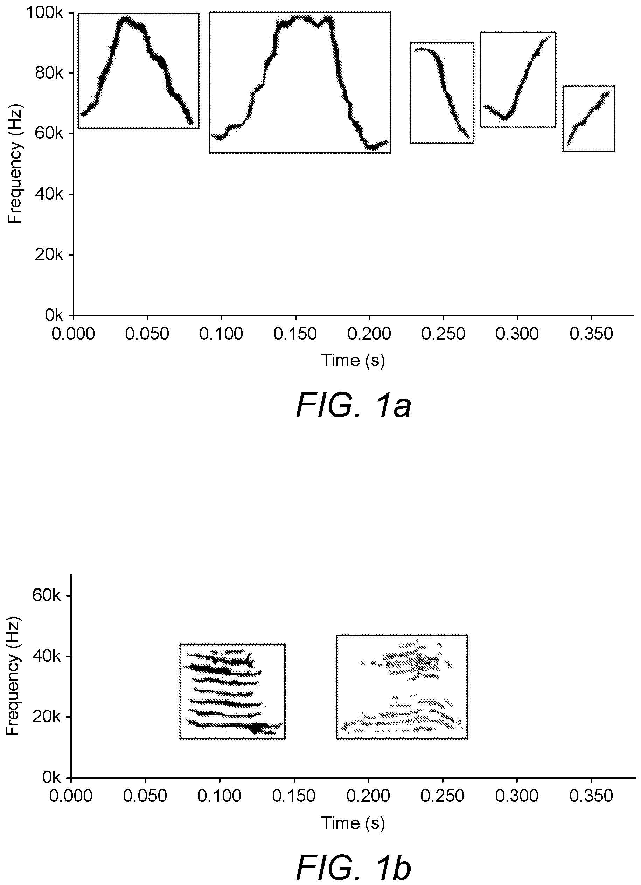

Rodents are one example of an animal pest that produces USVs. Although USVs have also been observed in other animals, for example, insects, which can also be animal pests, the embodiments described in this application will focus on rodents. However, it will be appreciated that the teaching of this application can also be applied to other animal pests, and that the graphs of Figures 1a to 1d are merely exemplary.

Figure 1a shows a graph of a sample of an input sound signal obtained from a region in which mice are known to be present. The graph shows the strong frequencies of the input sound signal versus time. In particular, the shading in the graph represents a high level of a particular frequency harmonic present in the input sound signal. In the graph of Figure 1a, the shading occurs mainly in the upper part of the graph, i.e. in the frequency range 60 to 100 kHz. This therefore clearly shows the ability of mice to vocalise in the ultrasonic frequency range.

A number of signal patterns have been identified, as shown indicated by the rectangular boxes in the graph of Figure 1a. These signal patterns are characteristic of mouse vocalisations, which may be used by them to call or communicate with other mice in the region, for example, to alert the other mice to their presence or to issue a warning of a danger. In particular, these identified signal patterns are specific to mice and indicate the presence of mice in the region.

Recordings are made of representative members of the animal species concerned in order to capture a series of characteristic ultrasonic vocalisations for that species. The pattern characteristics for each type of vocalisation are then described mathematically by running a statistical analysis of the key parameters of the calls in these recordings, e.g. various aspects of the call duration, amplitude, start and end frequencies, entropy and harmonics. This allows a mathematical model to be created that can describe each type of call.

Figure 1b shows the same type of graph as Figure 1a but for another sample of an input sound signal obtained from a region in which mice are known to be present. Here there has been identified another type of signal pattern as shown by the rectangular boxes in the graph of Figure 1b. These signal patterns are characteristic of a mouse "roar", which a mouse may produce, for example, to demonstrate its social status or to deter rivals. Again, these identified signal patterns are specific to mice and indicate the presence of mice in the region.

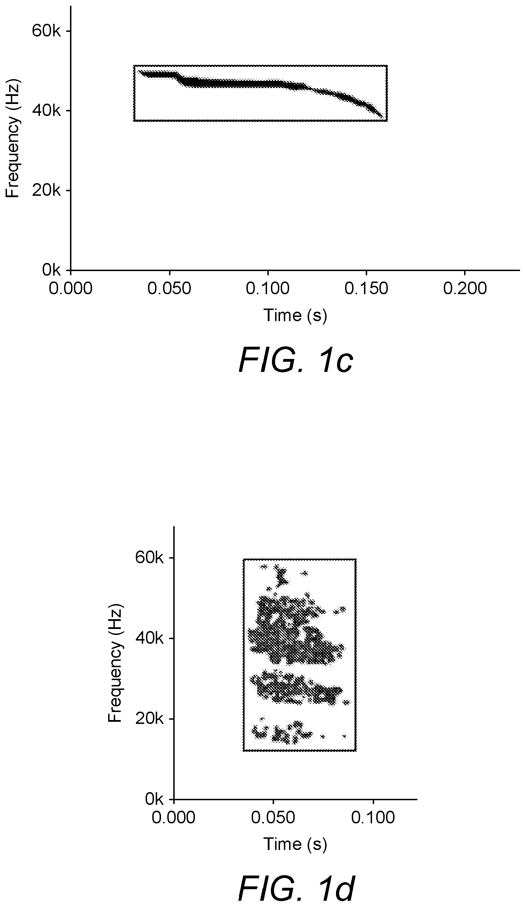

Figure 1c shows the same type of graph as Figures 1a and 1b but for another sample of an input sound signal obtained from a region in which mice are known to be present. Here there has been identified another type of signal pattern as shown by the rectangular box in the graph of Figure 1c. This signal pattern is characteristic of a call of a mouse pup separated from its mother. Yet again, these identified signal patterns are specific to mice and, in this case, do not just indicate the presence of mice in the region but that the mice are breeding, i.e. the scale of the infestation is increasing.

Finally, Figure 1d shows the same type of graph as Figures 1a to 1c but for another sample of an input sound signal obtained from a region in which mice are known to be present. Here there has been identified another type of signal pattern as shown by the rectangular box in the graph of Figure 1d. This signal pattern is characteristic of a mouse "screech".

Figures 1a to 1d are graphical representations of the various sound signals obtained from animals of interest. However, it will be appreciated that a graphical representation is not required in the operation of the invention itself described below, i.e. the entire process can be automated within software and/or hardware without the need for a graphical display.

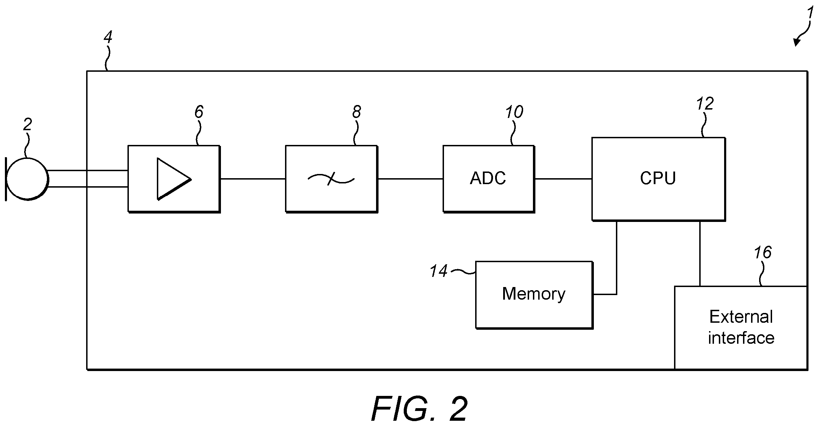

Figure 2 shows an exemplary device 1 for detecting animal pests having a microphone 2 and a processing unit 4. The microphone 2 constitutes a first transducer, i.e. a device which converts a signal in one form of energy to a signal in another form of energy; in this case sound is converted to an electric signal. It will be appreciated that any transducer which provides the necessary conversion can be used.

The microphone 2 monitors the sounds produced in a desired region so that the device can obtain an input sound signal within an ultrasonic frequency range. This can be achieved in a number of ways. For example, a microphone with a particular sensitivity for ultrasonic frequencies can be used or, alternatively, a broader frequency range microphone can be used and the obtained sound signal filtered to isolate only the frequency range of interest. Even if a microphone with a particular sensitivity for ultrasonic frequencies is used, it will be appreciated that some form of filtering may still be required to remove noise or unwanted interference. The microphone 2 may be integral with the device 1. Alternatively, the microphone 2 may be separate, or even remote, from the processing unit 4 and connected to the processing unit 4 by a wired or wireless connection.

The processing unit 4 processes the electric signal obtained from the microphone 2. In the described embodiment, the processing unit comprises an amplifier stage 6, a filtering stage 8, an analogue-to-digital convertor (ADC) 10, a processor such as a central processing unit (CPU) or microprocessor 12, a memory 14 and an external interface 16.

The amplifier stage 6 is provided to amplify the electric signal obtained from the microphone 2 as the signal obtained can be weak. However, it will be appreciated that an amplifier stage may not be required if the signal strength is suitably strong. As discussed above, a filtering stage 8 may be required to isolate the ultrasonic frequency range, typically above 18 kHz and more typically above 20 kHz. Any suitable filter may be used, for example, a high-pass filter or a band pass filter. The filtering stage 8 may also be required to remove unwanted interference from the input sound signal. This can take the form of electrical interference, for example, interference from switched mode power supplies which operate in the kHz frequency ranges or radio interference, particularly in the long and medium wave bands. Notch filters or any other type of suitable filter may be used to remove these unwanted frequencies.

The input sound signal is then passed to ADC 10 to convert the analogue electric signal to a digital signal which can be processed by CPU 12. The ADC 10 may be a standalone unit or integral with CPU 12.

Once digitised, the input sound signal can be analysed using digital signal processing techniques to distinguish signal patterns characteristic of sounds made by a rodent within the ultrasonic frequency range, for example, the signal patterns identified in Figures 1a to 1d.

The signal processing matches the input sound signal data against the mathematical model of each call type held inside the unit. It will be appreciated by the skilled person that there are numerous different operators and techniques signal processing operations which could be used. However a particular signal features found by the signal processing, in accordance with an embodiment of the invention are described later below.

The signal processing may be carried out in hard-wired logic, but in this embodiment it is carried out by the CPU 12 under the control of a software program stored in memory 14, which memory can be either a standalone unit or integral to the CPU 12. A separate standalone memory may be required if the memory integral to the CPU 12 is insufficient. The signal processing is performed by the CPU 12 which identifies signal patterns characteristic of a rodent, thereby detecting the presence of rodents in the desired region. The outcome of the analysis, i.e. whether signal patterns characteristic of rodents have been detected, is stored in memory 14. In addition, the input sound signal also can be stored in memory 14. This means that analysis does not necessarily have to be carried out immediately at the time of obtaining the input sound signal and also allows for further analysis, possibly remotely, to be carried out at a later time. Also the stored sound may be played back later to an operator for their confirmation that the animal is present.

The external interface 16 allows for connection of the device 1 with an external device or network. The external interface 16 can be, for example, a network interface, such as an Ethernet connection, to connect to a Local Area Network (LAN) or the Internet and/or it can be a serial interface such as a Universal Serial Bus (USB) interface port. The external interface can instead be a wireless connection. By means of the external interface 16, data stored within the device can be accessed for analysis locally or can be uploaded for analysis remotely, for example, via a web server.

Alternatively, a binary outcome can simply be recorded in the device, i.e. USV detected or not detected, and the external interface can simply output this binary outcome or even by a simple indicator, for example, a flashing light, indicating that a rodent USV signal pattern has been detected.

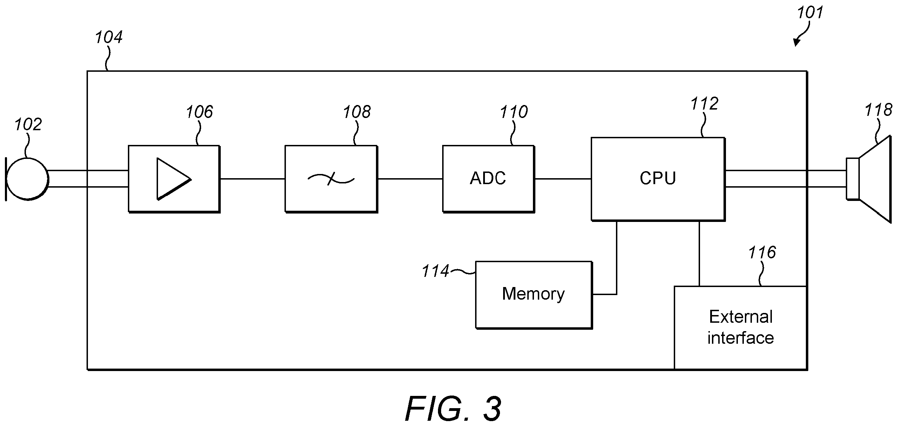

The embodiment of Figure 2 uses passive detection, i.e. it passively monitors sounds made by rodents. However, Figure 3 shows a further embodiment of the present invention which utilises active detection, i.e. the device actively tries to induce a behavioural response and/or call from the rodent in order to detect the rodent.

The device 101, in accordance with an embodiment of the invention, of Figure 3 is identical to that of Figure 2, with the exception that it additionally has a loudspeaker 118 configured to output a sound in the ultrasonic frequency range. The memory 114 stores an ultrasonic signal pattern characteristic of a sound made by a rodent. The device 101 is configured to output or playback a sound corresponding to the stored ultrasonic signal pattern via loudspeaker 118 such that a rodent USV is emitted by the device 101 in the desired region. The loudspeaker 118 therefore constitutes a second transducer which converts the electric signal of the stored ultrasonic signal pattern into a corresponding sound. By emitting a rodent USV, a rodent in the desired location may be attracted to approach the device and respond with its own USV. The response would be detected by the device, thereby providing for active detection of rodents in the desired location. Of course, the USV outputted should be one likely to attract a rodent rather than repel it. For example, USVs corresponding to a rodent "whistle" or a pup separated from its mother are likely to attract a rodent, whereas a "roar" of a dominant rodent may deter other rodents.

The signal pattern emitted is, for example, a recording of an actual call or other sound made by the animal of interest. In another example it may be an artificial sound, for example a constant 50kHz tone, that will induce a an animal to approach or retreat and/or call back. In the case of the latter the device can then detect its presence.

Emitted sounds may, in a further embodiment, be used to attract animals of interest to enter a pest control mechanism. If a particular species is of interest then the emitted sounds can be tailored to attract that species.

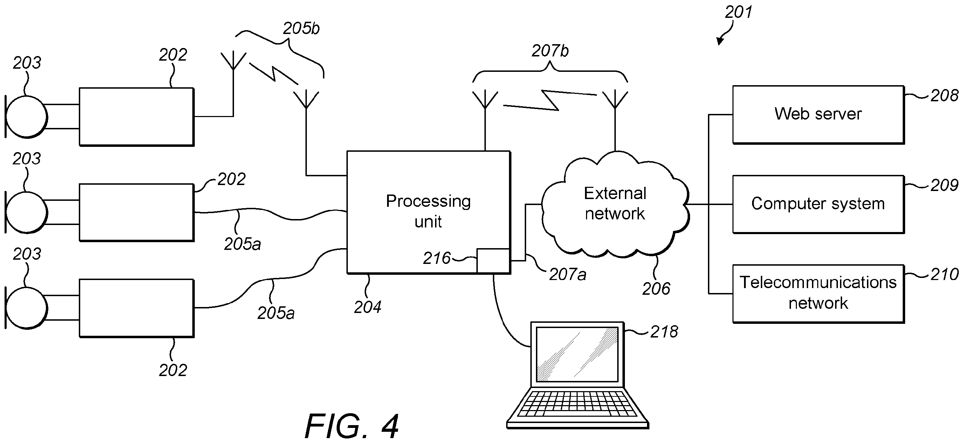

Figure 4 shows a system 201 for detecting rodent pests. The system 201 comprises a plurality of transducer units 202 having microphones 203 which obtain an input sound signal from their respective locations within a desired region, at a site. The transducer units 202 may include means to conduct provisional processing on the input sound signal. For example, the transducer units 202 may amplify, filter and/or digitise the input sound signal to create a transducer output signal which can be transmitted to a processing unit 204. The transducer output signal is transmitted to the processing unit 204 by means of wired connections 205a or wireless connections 205b.

The system of Figure 4 may also comprise at least one loudspeaker (not shown) connected to processing unit 204 to provide for the active detection discussed above.

The processing unit 204 comprises the same components as processing unit 4 in Figure 2. Of course, if the transducer units 202 digitise the transducer output signal prior to transmission, then there is no need for an ADC within the processing unit 204. However, it will be appreciated that the processing unit 204 can be configured appropriately to handle the different types of signal it may receive.

The processing unit 204 in the embodiment of Figure 4 analyses and processes the transducer output signal in the same way that processing unit 4 of Figure 2 analyses and processes the input sound signal. The outcome of the analysis, i.e. whether signal patterns characteristic of rodent USVs have been detected, is stored in a memory in processing unit 204.

The data stored in processing unit 204 can be accessed via external interface 216. This can either be done locally by connecting a data processing device 218 such as a computer to the external interface 216, for example, by means of a USB connection. Alternatively, the data can be accessed remotely by connecting to an external network 206 either by means of a wired connection 207a or a wireless connection 207b. External network can be connected to one or more of a web server 208, a computer system 209 or a telecommunications network 210. The web server 208 means that the data and status of processing unit 204 can be checked via a web portal or website. The telecommunications network 210 means that notifications can be sent to operators when a certain event occurs, for example, if a rodent USV is detected. An operator then may respond by visiting the site and carrying out a pest control activity.

The devices 1, 101 and system 201 of the present application are able to detect low level animal pest infestations earlier and with reduced effort compared to current techniques. There will also be fewer false-positive detections because the sounds detected can be associated with a high degree of certainty to a particular animal pest. As discussed above with respect to Figures 1a to 1d, the signal patterns identified were specific to mice and would not be confused with other sounds. Other methods are far less reliable. For example, an infrared beam in a monitoring trap can be broken by a spider or even dust.

Furthermore, the ability to communicate a positive detection remotely means that present invention does not rely on the need for periodic and costly visits to inspect traps, etc. and also reduces the number of times an operator may have to revisit a site or desired location due to an unresolved infestation. In addition, the device and system can be operated continuously, i.e. 24 hours a day, 7 days a week. The devices 1, 101 and system 201 lead to higher productivity because an operator is able to focus on sites, or regions of a site, where there is an active infestation and customise their response based on the number of USVs detected. As a result, the risk to property and of the spread of disease is reduced.

Moreover, the active detection embodiment described above may alter animal behaviour in other ways which may be beneficial to controlling infestations. For example, once a rodent USV has been detected, the present invention could be used to attract mice into certain regions, keeping them out from other regions. Alternatively, once a USV has been detect, the active detection embodiment could be reconfigured to play a USV which deters animals such as rodents from entering a certain region, i.e. the device or system could be used as a deterrent.

In view of the foregoing description it will be evident to a person skilled in the art that various modifications may be made within the scope of the invention. For example, the devices 1 and 101 of Figures 2 and 3 respectively could have a plurality of microphones 2, 102 connected to the processing unit 4, 104.

As illustrated by Figure 1 the signal processing, in one embodiment, makes used of consecutive spectra of the ultrasonic sounds made by the animal, for a series of consecutive times over a period of time. The graphs of these in Figure 1 show with the dark patches the peaks of the signal intensity against frequency at each of those times. So for example a constant tone would appear as a horizontal line at the frequency of that tone. As may be seen from the graphs some of the in some of the ultrasound patterns the tones are not constant and others have harmonics, which show as generally horizontal stripes.

For the "roar" mentioned above, the signal processing performed by the system is according to the following method.

First, the "lifespan" of the ultrasonic cry, the time between its beginning and end is compared to a minimum length value (determined from experimental measurements of roars). If the ultrasound pattern is too short in duration it is rejected as being a roar and the method does not proceed further.

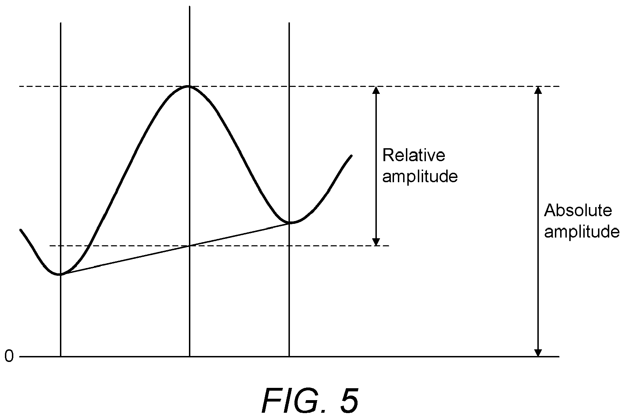

In a second step, an average is taken over a period of the ratio (see Figure 5) of the spectrum's peaks' relative amplitude to their absolute amplitude. Here the absolute amplitude is the height of the peak above zero and the relative amplitude is the height of the peak above the point at the frequency of the peak on a line between the minima of the spectrum nearest the peak. If this average is smaller than a experimentally determined value then the ultrasound is again rejected as a roar; a screech or some noise is more likely,
In a third step it is checked whether the peaks in the spectrum form a harmonic series, which is characteristic of a roar. For each of a set of points in time (for example all those points samples) the intervals in frequency between the peaks are measured. The intervals for each spectrum are then compared to each other by calculating a measure of similarity. (A minimum of three peaks in a spectrum provides two intervals, which can then be compared to each other. Four peaks provide three intervals which can then be compared to each other.) The measures of similarity are averaged over the roar, in particular several sections of it. If the average numerical similarity of the interval over sections of the roar is above a particular experimentally determined value and if that is sustained for an experimentally determined minimum period then the ultrasound is accepted as a roar. In short, the method checks whether the roar is maintained as harmonic series. Note that the frequencies of the peaks do not have to stay constant only the relative intervals between them.

Finally if the ultrasound has passed all of those three tests then it is identified by the system as a roar.

For the "whistle" mentioned above, the signal processing performed by the system is according to the following method.

First, the lifespan of the ultrasonic cry, the time between its beginning and end is compared to a minimum length value (determined from experimental measurements of whistles). If the ultrasound pattern is too short in duration it is rejected as being a whistle and the method does not proceed further.

In a second step, the number of peaks in the spectrum for a set of times during the whistle (for example all the times sampled) is averaged. A whistle usually has only one peak and the method checks to see if this average is near one. If the average is above an experimentally determined value, an upper limit, then then it is rejected as a whistle and the method does not proceed further, a screech or some noise being more likely. If the average is below that limit then it is compared to an experimentally determined lower limit (lower than the upper limit) then again it is rejected as a whistle if below this limit and the method does not proceed further. However if the average is between those two limits, then the method proceeds to the third step.

In the third step an average is taken over a period of the ratio of the spectrum's peak's relative amplitude to their absolute amplitude. If this average is smaller than a experimentally determined value then the ultrasound is again rejected as a whistle; a screech or some noise is more likely,
Finally if the ultrasound has passed all of those three tests then it is identified by the system as a whistle.

Note that to perform these processing the frequency spectra formed from the ultrasound captured are preferably first smoothed, so that only the most significant peaks are considered in the processing.

In the processing methods noted above a measure of similarity is used. Many such measures can be constructed but a possible method is to first construct the "distance" d between the two values V1 and V2 as d=abs(V2-V1)/abs(V2+v1), where abs() is the absolute value, and then defining similarity as some inverse of that for example s=1-d, or s=1/(1+d).

These exemplary methods identify characteristics patterns over time of the arrangement of the strongest frequencies in the spectra of the ultrasound. Similar methods can be used to identify other cries.

## Claims

1. A method of pest control, the method comprising:
storing an ultrasonic signal pattern characteristic of a sound made by a species of animal;
outputting a sound corresponding to the stored ultrasonic signal pattern;
monitoring for sounds in a desired region so as to obtain an input sound signal (1a, 1b, 1c, 1d) within a predetermined frequency range;
**characterised in that** the method further comprises:
analysing the obtained input sound signal (1a, 1b, 1c, 1d) to distinguish at least one ultrasonic signal pattern characteristic of a sound made by the species of animal within the frequency range,
determining if an animal of the species of animal is present in the desired region based on the distinguishing of the at least one ultrasonic signal pattern characteristic of a sound made by the animal
wherein the sound output is a vocalisation made by the species of animal.

2. A method according to claim 1, comprising transmitting a notification indicating that it has been determined that an animal is present in the desired region to a location remote from the desired region, the operator visiting the desired region in response to the notification.

3. A method according to any preceding claim, further comprising analysing the input sound signal (1a, 1b, 1c, 1d) to distinguish between ultrasonic signal patterns characteristic of different sounds made by the species of animal.

4. A method according to any preceding claim, wherein the sound output is such that the animal is induced to approach the desired region.

5. A method according to any preceding claim, wherein the sound output is such that the animal is induced to depart from the desired region.

6. A method according to any preceding claim, wherein the sound output is such that the animal is induced to respond by making a call.

7. A method according to any preceding claim, wherein the species of animal is a rodent.

8. A method according to claim 8, wherein the ultrasonic signal pattern is characteristic of any one or more of a rodent whistle, a rodent roar or a call of a rodent pup separated from its mother.

9. A device (101) configured to store an ultrasonic signal pattern characteristic of a sound made by a species of animal in a memory (114), the device comprising:
a first transducer (118) configured to output a sound corresponding to the stored signal ultrasonic pattern;
a second transducer (102) configured to monitor for sounds in the desired region so as to obtain an input sound signal (1a, 1b, 1c, 1d) within a predetermined frequency range;
**characterised in that** the device (101) further comprises:
a processing unit (112) configured to analyse the input sound signal (1a, 1b, 1c, 1d) to distinguish at least one ultrasonic signal pattern characteristic of a sound made by the species of animal within the frequency range.
wherein the sound output is a vocalisation made by the species of animal.

10. A device (101) according to claim 9, wherein the device (101) is configured to generate an output signal, via the first transducer (118), if the at least one ultrasonic signal pattern characteristic of a sound made by the species of animal is distinguished.

11. A device (101) according to claim 9 or 10, wherein the processing unit (112) is further configured to analyse the input sound signal (1a, 1b, 1c, 1d) to distinguish between ultrasonic signal patterns characteristic of different sounds made by the species of animal.

12. A device (101) according to any one of claims 9 to 11, further comprising an external interface (116), the external interface (116) configured to enable data to be retrieved from the device (101) or to provide connection to an external network.

13. A device (101) according to any one of claims 9 to 12, wherein the second transducer is separate to the remainder of the device (101) and connected to the device (101) by a suitable connector such that the second transducer can be positioned away from the device (101).

14. A device (101) according to any one of claims 9 to 13, further comprising a plurality of second transducers (102).

## Patentansprüche

1. Verfahren zur Schädlingsbekämpfung, wobei das Verfahren umfasst:
Speichern eines Ultraschallsignalmusters, das für einen von einer Tierart erzeugten Laut charakteristisch ist;
Ausgeben eines Lauts, der dem gespeicherten Ultraschallsignalmuster entspricht;
Anzeigen von Lauten in einer gewählten Region, um ein Eingangsschallsignal (la, 1b, 1c, 1d) innerhalb eines vorbestimmten Frequenzbereichs zu erhalten;
**dadurch gekennzeichnet, dass** das Verfahren ferner umfasst:
Analysieren des erhaltenen Eingangsschallsignals (la, 1b, 1c, 1d), um mindestens ein Ultraschallsignalmuster zu unterscheiden, das für einen von der Tierart innerhalb des Frequenzbereichs erzeugten Laut charakteristisch ist,
Bestimmen, ob ein Tier der Tierart in der gewählten Region vorhanden ist, basierend auf der Unterscheidung des mindestens einen Ultraschallsignalmusters, das für einen von dem Tier erzeugten Laut charakteristisch ist,
wobei die Lautausgabe eine von der Tierart erzeugte Vokalisierung ist.

2. Verfahren nach Anspruch 1, umfassend das Übertragen einer Mitteilung, die die Feststellung der Anwesenheit eines Tiers in der gewählten Region angibt, an einen Ort fern von der gewählten Region, wobei der Bediener die gewählte Region als Reaktion auf die Mitteilung besucht.

3. Verfahren nach einem der vorangehenden Ansprüche, ferner umfassend das Analysieren des Eingangsschallsignals (1a, 1b, 1c, 1d), um zwischen Ultraschallsignalmustern zu unterscheiden, die für die von der Tierart gemachten unterschiedlichen Laute charakteristisch sind.

4. Verfahren nach einem der vorangehenden Ansprüche, wobei die Lautausgabe so ist, dass das Tier veranlasst wird, sich der gewählten Region zu nähern.

5. Verfahren nach einem der vorangehenden Ansprüche, wobei die Lautausgabe so ist, dass das Tier veranlasst wird, die gewählte Region zu verlassen.

6. Verfahren nach einem der vorangehenden Ansprüche, wobei die Tonausgabe so ist, dass das Tier veranlasst wird, durch einen Ruf zu antworten.

7. Verfahren nach einem der vorangehenden Ansprüche, wobei die Tierart ein Nagetier ist.

8. Verfahren nach Anspruch 8, wobei das Ultraschallsignalmuster charakteristisch ist für eines oder mehrere aus einem Fiepen eines Nagetiers, einem Schreien eines Nagetiers oder einem Ruf eines von seiner Mutter getrennten Nagetierjunges.

9. Vorrichtung (101), die konfiguriert ist, um ein Ultraschallsignalmuster, das für einen von einer Tierart erzeugten Laut charakteristisch ist, in einem Speicher (114) zu speichern, wobei die Vorrichtung umfasst:
einen ersten Wandler (118), der konfiguriert ist, um einen Laut auszugeben, der dem gespeicherten Ultraschallsignalmuster entspricht;
einen zweiten Wandler (102), der konfiguriert ist, um Laute in der gewählten Region zu überwachen, um ein Eingangsschallsignal (la, 1b, 1c, 1d) innerhalb eines vorbestimmten Frequenzbereichs zu erhalten;
**dadurch gekennzeichnet, dass** die Vorrichtung (101) ferner umfasst:
eine Verarbeitungseinheit (112), die konfiguriert ist, um das Eingangsschallsignal (la, 1b, 1c, 1d) zu analysieren, um mindestens ein Ultraschallsignalmuster zu unterscheiden, das für einen von der Tierart innerhalb des Frequenzbereichs erzeugten Laut charakteristisch ist,
wobei die Lautausgabe eine von der Tierart erzeugte Vokalisierung ist.

10. Vorrichtung (101) nach Anspruch 9, wobei die Vorrichtung (101) konfiguriert ist, um ein Ausgangssignal über den ersten Wandler (118) zu erzeugen, wenn das mindestens eine Ultraschallsignalmuster, das für einen von der Tierart erzeugten Laut charakteristisch ist, unterschieden wird.

11. Vorrichtung (101) nach Anspruch 9 oder 10, wobei die Verarbeitungseinheit (112) ferner konfiguriert ist, um das Eingangsschallsignal (la, 1b, 1c, 1d) zu analysieren, um zwischen Ultraschallsignalmustern zu unterscheiden, die für die von der Tierart erzeugten unterschiedlichen Laute charakteristisch sind.

12. Vorrichtung (101) nach einem der Ansprüche 9 bis 11, ferner umfassend eine externe Schnittstelle (116), wobei die externe Schnittstelle (116) konfiguriert ist, um das Abrufen von Daten aus der Vorrichtung (101) zu ermöglichen oder um eine Verbindung mit einem externen Netzwerk bereitzustellen.

13. Vorrichtung (101) nach einem der Ansprüche 9 bis 12, wobei der zweite Wandler vom Rest der Vorrichtung (101) getrennt ist und über einen geeigneten Verbinder mit der Vorrichtung (101) verbunden ist, so dass der zweite Wandler entfernt von der Vorrichtung (101) positioniert werden kann.

14. Vorrichtung (101) nach einem der Ansprüche 9 bis 13, ferner umfassend mehrere zweite Wandler (102).

## Revendications

1. Procédé de lutte contre les animaux nuisibles, le procédé comprenant les étapes suivantes :
stocker un motif de signal ultrasonore caractéristique d'un son produit par une espèce animale ;
délivrer en sortie un son correspondant au motif de signal ultrasonore stocké ;
surveiller les sons dans une région souhaitée afin d'obtenir un signal sonore d'entrée (1a, 1b, 1c, 1d) dans une plage de fréquences prédéterminée ;
**caractérisé en ce que** le procédé comprend en outre les étapes suivantes :
analyser le signal sonore d'entrée obtenu (1a, 1b 1c, 1d) afin de distinguer au moins un motif de signal ultrasonore caractéristique d'un son produit par l'espèce animale dans la plage de fréquences,
déterminer si un animal de l'espèce animale est présent dans la région souhaitée sur la base de la distinction du ou des motifs de signal ultrasonore caractéristique d'un son produit par l'animal,
où la sortie sonore est une vocalise produite par l'espèce animale.

2. Procédé selon la revendication 1, comprenant une étape consistant à transmettre une notification indiquant qu'il a été déterminé qu'un animal était présent dans la région souhaitée, à un emplacement distant de la région souhaitée, l'opérateur visitant la région souhaitée en réponse à la notification.

3. Procédé selon l'une quelconque des revendications précédentes, comprenant en outre une étape consistant à analyser le signal sonore d'entrée (1a, 1b, 1e, 1d) afin de distinguer les motifs de signal ultrasonore caractéristique des différents sons produits par l'espèce animale.

4. Procédé selon l'une quelconque des revendications précédentes, où la sortie sonore est telle que l'animal est incité à s'approcher de la région souhaitée.

5. Procédé selon l'une quelconque des revendications précédentes, où la sortie sonore est telle que l'animal est incité à quitter la région souhaitée.

6. Procédé selon l'une quelconque des revendications précédentes, où la sortie sonore est telle que l'animal est incité à répondre en émettant un appel.

7. Procédé selon l'une quelconque des revendications précédentes, où l'espèce animale est un rongeur.

8. Procédé selon la revendication 8, où le motif de signal ultrasonore est caractéristique d'un ou de plusieurs d'un sifflement de rongeur, d'un hurlement de rongeur, ou d'un appel d'un jeune rongeur séparé de sa mère.

9. Dispositif (101) configuré pour stocker un motif de signal ultrasonore caractéristique d'un son produit par une espèce animale, dans une mémoire (114), le dispositif comprenant :
un premier transducteur (118) configuré pour délivrer en sortie un son correspondant au motif de signal ultrasonore stocké ;
un second transducteur (102) configurée pour surveiller les sons dans la région souhaitée afin d'obtenir un signal sonore d'entrée (1a, 1b, 1c, 1d) dans une plage de fréquences prédéterminée ;
**caractérisé en ce que** le dispositif (101) comprend en outre :
une unité de traitement (112) configurée pour analyser le signal sonore d'entrée obtenu (1a, 1b 1c, 1d) afin de distinguer au moins un motif de signal ultrasonore caractéristique d'un son produit par l'espèce animale dans la plage de fréquences,
où la sortie sonore est une vocalise produite par l'espèce animale.

10. Dispositif (101) selon la revendication 9, où le dispositif (101) est configuré pour générer un signal de sortie, par l'intermédiaire du premier transducteur (118), si le ou les motifs de signal ultrasonore caractéristique d'un son produit par l'espèce animale, sont distingués.

11. Dispositif (101) selon la revendication 9 ou 10, ou l'unité de traitement (112) est configurée en outre pour analyser le signal sonore d'entrée (1a, 1b, 1c, 1d) afin de distinguer les motifs de signal ultrasonore caractéristique des différents sons produits par l'espèce animale.

12. Dispositif (101) selon l'une quelconque des revendications 9 à 11, comprenant en outre une interface extérieure (116), l'interface extérieure (116) étant configurée pour permettre de récupérer des données à partir du dispositif (101), ou pour fournir une connexion à un réseau externe.

13. Dispositif (101) selon l'une quelconque des revendications 9 à 12, où le second transducteur est distinct du reste du dispositif (101), et est connecté au dispositif (101) par un connecteur approprié de telle sorte que le second transducteur puisse être positionné à distance du dispositif (101).

14. Dispositif (101) selon l'une quelconque des revendications 9 à 13, comprenant en outre une pluralité de seconds transducteurs (102).
